# EUROPEAN PATENT APPLICATION

(11) **EP 1 434 211 A1**
(43) Date of publication of application: **30.06.2004**
(21) Application number: 02762813.0
(22) Date of filing: 21.08.2002
(51) Int. Cl.: G11B 7/26, G11B 7/24

(54) **STAMPER FOR MANUFACTURING OPTICAL RECORDING MEDIUM, METHOD FOR FORMING INFORMATION RECORDING AREA AND LIGHT TRANSMITTING LAYER, AND OPTICAL RECORDING MEDIUM**

(30) Priority: 28.08.2001 JP 2001258267
(71) Applicant: TDK Corporation, Chuo-ku, Tokyo 103-8272 (JP)
(72) Inventor: YAMAGA, Kenji, TDK CORPORATION, Tokyo 103-8272 (JP); KOMAKI, Tsuyoshi, TDK CORPORATION, Tokyo 103-8272 (JP); SUZAWA, Kazuki, c/o TDK CORPORATION, Tokyo 103-8272 (JP)
(74) Representative: Wagner & Geyer
(86) International application number: PCT/JP2002/008399
(87) International publication number: WO 2003/021590

(57) **Abstract**

A surface treatment of an light transmission layer by spin coating is carried out in a simple way at low cost.

When an light transmission layer is to be formed by spin coating, the transfer of an information recording layer 108 is carried out using a resin stamper 140 having a convex portion 140A in an outer peripheral portion. At the same time, an inclined plane (concave portion) 135A is formed on the side of a substrate (member on which transfer is performed) 104. As a result, coating is achieved in such a manner that a raise in the outer peripheral portion is prevented from being noticeable.

## Description

### TECHNICAL FIELD

The present invention relates to: a stamper for fabrication of an optical recording medium, which is suitable for fabricating an optical recording medium, in particular, an optical recording medium having large capacity; a method of forming an information recording area and an light transmission layer using the stamper; and an optical recording medium.

### BACKGROUND ART

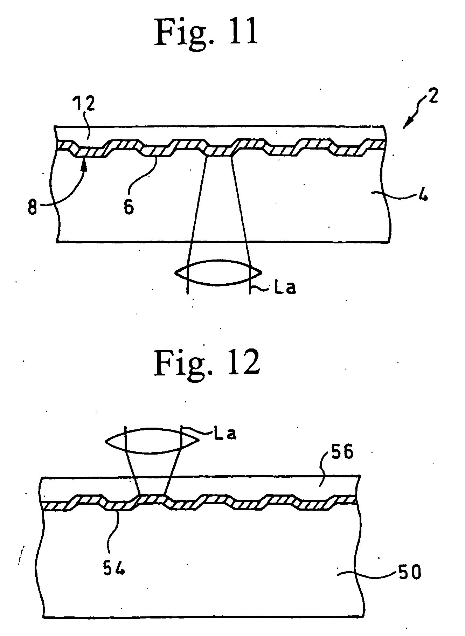

As a form of optical recording media for audio and video, and for recording other various information, for example, an optical disc on which information signals are written by embossed pits is widely used. The most basic form of optical disc is shown in Fig. 11. This optical disc 2 comprises an information recording layer 8 having a reflective film 6 on an light transmission molded substrate (supporting plate) 4. A protective layer 12 made of an UV curable resin or the like is formed thereon. In this optical disc 2, a laser beam La is irradiated on the side of the molded substrate 4 acting as an light transmission layer so as to read an information signal from the information recording layer 8.

A recording density of the optical disc 2 can be increased as a spot diameter of the used laser beam La is reduced. The spot diameter is proportional to: λ/NA (λ: a wavelength of a laser beam, NA: a numerical aperture of an objective lens). Therefore, in order to reduce the spot diameter, it is necessary either to reduce the wavelength λ of the laser beam La or to increase the numerical aperture NA of the objective lens.

As the wavelength λ of the laser beam La, a wavelength of 780 nm is used for CDs, whereas a wavelength of 650 nm is used for DVDs. For the future, a wavelength in the vicinity of 400 nm corresponding to a blue laser is expected for use. Since the spot diameter is reduced for the decreased wavelength, a recording density is increased.

On the other hand, coma aberration is increased as the numerical aperture NA is increased. In order to keep coma aberration small even with the increased numerical aperture NA, it is necessary to reduce a thickness of the light transmission layer (the molded substrate 4) through which the laser beam La passes.

Conventionally, as the light transmission layer (the molded substrate 4) of the optical disc 2, a molded product made of a resin, molded by injection molding or the like, is frequently used. However, by this fabrication method, it is difficult to fabricate the molded substrate 4 to have a smaller thickness than that of the currently used DVDs with good accuracy using the current technique. More specifically, in the optical disc 2 having a structure using the molded substrate 4 as an light transmission layer as shown in Fig. 11, a technique of increasing a recording density by an increased NA to increase the capacity reaches the limit in the present state in view of the fabrication technique.

To cope with this, a technique for achieving further increase in an NA of laser beam by elaboration of a technique of forming an light transmission layer has been proposed in, for example, Japanese Patent Laid-Open Publication No. 1996-235638, Japanese Patent Laid-Open Publication No. 1999-203724, and the like.

Specifically, this technique is, as shown in Fig. 12, for forming a molded substrate 50, which is not required to transmit any light, by injection molding to have a large thickness as a base of a disc body. Next, an information recording layer 54 having a reflective layer 52 is formed on the molded substrate 50. An extremely thin (at the maximum, about 300 µm) light transmission layer 56 is deposited thereon by means such as attachment of an light transmission sheet, resin coating through spin coating or the like.

The laser beam La is irradiated on the side of the thin light transmission layer 56 to record and/or read information on and/or from the information recording layer 54. In this manner, it is possible to form the thinner light transmission layer 56 while ensuring the entire strength on the side of the molded substrate 50. Therefore, a higher density (larger capacity) can be achieved by the approach of a higher NA of the laser beam.

Under the actual conditions, however, the above-described improvement technique still has various problems in a concrete way of forming the thin light transmission layer.

Generally, as a method for forming the thin light transmission layer, a method of bonding a transparent sheet onto a molded substrate (or a supporting plate), a method of applying (coating) a resin by spin coating and the like have been proposed.

However, the method of bonding a transparent sheet is likely to have elevated fabrication cost because strict optical characteristics of the sheet itself and thickness accuracy are required. Moreover, even if the thickness accuracy of the transparent sheet is good, an uneven thickness or uneven application of an adhesive changes the optical characteristics in some cases. Thus, high accuracy is required even for the application of an adhesive. Accordingly, under the actual conditions, many problems remain in this method.

The method of forming a thin light transmission layer by application of a resin through spin coating specifically consists in making a liquid UV curable resin (applied liquid) flow on a surface of a molded substrate (supporting plate) while rotating the molded substrate with a spindle so that the resin is uniformly spread in accordance with the rotation of the molded substrate to coat the resin layer. Thereafter, the coated resin is irradiated with an ultraviolet radiation so as to be cured. According to this method, the conditions such as a thickness of the coating can be adjusted by controlling a rotation speed of the spindle, application time and a viscosity of the applied liquid.

However, this method has a problem in that the flatness of the surface of the coating film is difficult to maintain in such a way that the concentration (raise) of the application liquid is likely to occur, in particular, in the vicinity of the outer periphery. The raise does not become such a serious problem in the case where there is a relatively large distance between a laser optical system and a disc such as a conventional CD and DVD. However, under the conditions where a gap between a laser optical system and a disc is reduced, it becomes an unignorable obstacle.

In the case where a relatively thick (for example, 100 µm) coating layer is formed, in particular, a thickness or a radial width of the raise becomes remarkably large to penetrate into an information recording area in some cases. Therefore, there is a possibility that a recordable area may be reduced to impair the recording/reading of information signals if no countermeasure is taken. Moreover, it also causes the collision of a laser optical system against a disc in some cases.

Regarding a treatment of the raise or the maintenance of smoothness of the coating surface, various proposals for ways of coping with them have been made in many documents, for example, Japanese Patent Laid-Open Publication Nos. 1999-203724, 1999-86355, 1999-86356, and the like. However, this signifies, in other words, "some measure" is necessarily needed irrespective of a concrete method thereof. Correspondingly, a fabrication process is complicated while cost is increased.

### DISCLOSURE OF THE INVENTION

The present invention is to solve such a conventional problem by developing a stamper having a predetermined structure and has an object of providing a stamper for fabrication of an optical recording medium in view of formation of a resin coating layer, in particular, by spin coating. The stamper is capable of easily achieving the flattening of the upper surface on the resin coating layer, and contributes to "increase in capacity" and/or "reduction in cost". The present invention also has an object of providing a method of forming an information recording area and an light transmission layer using the stamper.

The inventors of the present invention have solved the above problems by inventing a stamper for fabrication of an optical recording medium having a structure according to the following (1).

(1) A stamper for fabrication of an optical recording medium, including an information recording area having predetermined minute concavity and convexity on a transfer surface, which is used for transferring the minute concavity and convexity in the information recording area onto an information recording area on a surface of a member on which transfer is performed and does not ultimately serve as a constituting element of an optical recording medium, characterized in that a surface of an outer peripheral portion of the information recording area on the transfer surface is formed so as to be biased in a convex shape from the surface of the information recording area toward the member on which transfer is performed.

As described above, a technique of coating the information recording layer having a reflective film with a resin by spin coating and irradiating a laser beam on the side of this (extremely thin) resin coating layer using the resin coating layer as an light transmission layer, is extremely promising in that a recording density for each layer can be remarkably improved.

In the present invention, focusing attention on use of this technique, the problem of ensuring the flatness of the upper surface of the resin coating layer, which is a major bottleneck in realization of this technique, is solved by using the "stamper" having predetermined additional functions.

Since the stamper according to the present invention is literally a "stamper," it does not ultimately serve as a constituting element of the optical recording medium. Specifically, this stamper is removed after transfer of the minute concavity and convexity on the information recording area of the information recording layer of interest. Moreover, it is intended to perform the step of coating the upper surface of the information recording layer, on which transfer is performed by the stamper, with a resin, and to irradiate a laser beam on the resin-coated side.

Therefore, in contrast with a normal stamper (conventional CDs, DVDs and the like), the resin stamper has the minute concavity and convexity in which a wobble signal is formed on a "groove" in its own information recording area, in the case where, for example, it is used for fabrication of a recordable disc.

Since the "stamper" is generally for transferring the predetermined minute concavity and convexity on the surface on which transfer is performed, its surface is basically flat. However, the stamper according to the present invention also performs the shape control in which a bias in a concave shape is formed on the surface of the outer peripheral portion of the information recording area on the surface on which transfer is performed when the minute concavity and convexity are transferred. Therefore, it is greatly characterized by having the bias in a convex shape, which allows the shape control, on the surface of the outer peripheral portion of the information recording area on its own surface on which transfer is performed.

If the surface in the outer peripheral portion of the information recording area on the surface on which transfer is performed is biased in a concave shape, a raise, which is conventionally inevitably present on the side of the outer periphery on the upper surface of the resin coating layer, can be prevented from being noticeable. Therefore, special measure for flattening the upper surface of the resin coating layer, which is conventionally essential, is no more required. Moreover, the transfer of the minute concavity and convexity is an essential step. The bias in a concave shape can be formed simultaneously with the execution of this essential step. Therefore, once the stamper is produced, the number of steps at the mass production is not increased thereby.

As a result, in the end, an optical recording medium, in which access can be made from the side of a thin light transmission layer (from the resin-coated side) (that is, recording at a high density is possible), can be fabricated at low cost in a simple manner owing to the functions of the stamper according to the present invention.

With the stamper according to the present invention, the shape of the outer periphery on the side of the member, on which transfer is performed, can be easily changed into a predetermined shape without changing a mold body itself. Therefore, even when a composition or a thickness of a resin material for coating is changed or the like, the optimally corresponding outer peripheral shape can be easily obtained.

As described below, the stamper according to the present invention may be used as a stamper for forming an information recording layer of an optical recording medium including only one information recording layer or as a stamper for forming information recording layers of a double-layered (or more) optical recording medium.

Preferred embodiments in the present invention, or an example of a method of forming an information recording layer and an light transmission layer using the stamper according to the present invention is as follows. The respective merits thereof and the like will be described below.

(2) In (1), the stamper for fabrication of an optical recording medium, characterized by having a wobble signal in a groove of the minute concavity and convexity on the transfer surface.

(3) In (1) or (2), the stamper for fabrication of an optical recording medium, characterized in that the bias in the convex shape on the surface of the outer peripheral portion of the information recording area on the transfer surface is biased from the surface of the information recording area by at least 5 µm or more.

(4) In any one of (1) to (3), the stamper for fabrication of an optical recording medium, characterized in that the bias in the convex shape on the surface of the outer peripheral portion of the information recording area on the transfer surface is inclined toward the member on which transfer is performed so that a thickness of the stamper is gradually increased in an outer radial direction.

(5) In any one of (1) to (4), the stamper for fabrication of an optical recording medium, characterized in that the stamper is made of an light transmission resin having a transmittance of 50% or higher at a wavelength of 300 nm to 400 nm.

As a structure of a method of forming an information recording layer by use of the stamper described in the above (1) to (5), for example, the structure as follows can be given.

(6) A method of forming an information recording area and an light transmission layer, characterized by including the steps of: using the stamper for fabrication of an optical recording medium recited in any one of (1) to (5) to transfer the minute concavity and convexity onto an information recording area of the member on which transfer is performed and to form a bias in a concave shape corresponding to the convex shape,'on a surface of its outer periphery; forming a reflective film and/or a recording film at least on the minute concavity and convexity; and forming a resin layer serving as an light transmission layer on the member, on which transfer is performed, including the reflective film and/or the recording film and the biased portion in the concave shape.

(7) In (6), the method of forming an information recording area and an light transmission layer, characterized in that: the stamper is made of an light transmission resin having a transmittance of 50% or higher at a wavelength of 300 nm to 400 nm whereas the member, on which transfer is performed, is made of an UV curable resin; and an ultraviolet ray is irradiated on the side of the stamper to fix the minute concavity and convexity transferred onto the member, on which transfer is performed, and the bias in the concave shape corresponding to the convex shape.

(8) In (6), the method of forming an information recording area and an light transmission layer, characterized in that: the member, on which transfer is performed, can be heated and is made of a thermally curable resin; and the member, on which transfer is performed, is heated to fix the minute concavity and convexity transferred onto the member and the bias in the concave shape corresponding to the convex shape.

(9) An optical recording medium including at least an information recording area and an light transmission layer formed by using the method of forming the information recording area and the light transmission layer recited in any one of (6) to (8).

### BRIEF DESCRIPTION OF THE DRAWINGS

Fig. 1 is an enlarged cross-sectional view of a substantial part, schematically illustrating a structure in the vicinity of an outer peripheral portion of an optical disc formed by using a stamper according to the present invention;
Fig. 2 is a process chart showing a series of procedures for molding a substrate from a master stamper;
Fig. 3 is a process chart showing a procedure for producing a resin stamper from the master stamper;
Fig. 4 is a cross-sectional view showing the schematic of a mold assembly for fabricating the resin stamper;
Fig. 5 is a cross-sectional view showing the schematic of a mold assembly for producing the substrate;
Fig. 6 is a process chart showing the first half of the step of coating a resin constituting an light transmission layer by spin coating;
Fig. 7 is a process chart showing the second half of the above step;
Fig. 8 is a cross-sectional view schematically showing the structure of the vicinity of an outer peripheral portion of a double-layered optical disc formed by using the stamper according to the present invention;
Fig. 9 is a cross-sectional view schematically showing various methods for forming a resin constituting a (first) light transmission layer when the double-layered optical disc according to Fig. 8 is to be fabricated;
Fig. 10 is a process chart showing the second half of fabrication step of the above double-layered optical disc;
Fig. 11 is a partially enlarged cross-sectional view showing the structure of a conventional optical disc; and
Fig. 12 is a partially enlarged cross-sectional view showing a conventional example of the type in which laser beam is irradiated on the side of a thin light transmission layer.

### BEST MODE FOR CARRYING OUT THE INVENTION

Hereinafter, exemplary embodiments of the present invention will be described in detail with reference to the drawings.

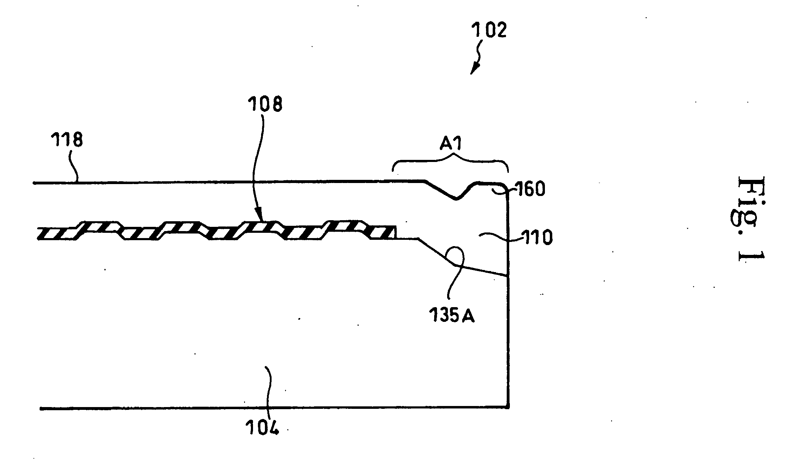

Fig. 1 schematically shows a cross section of an optical disc (optical recording medium) fabricated by using a stamper according to the present invention. This optical disc 102 comprises, from the bottom of the drawing: a (molded) substrate 104; an information recording layer 108 formed on the substrate 104; and an light transmission layer 110 formed on the information recording layer 108. On the light transmission layer 110, a protective layer 118 is further formed as needed. A laser beam La is irradiated on the side of the light transmission layer 110 so as to record and/or read an information signal on/from the information recording layer 108. In an outer peripheral portion A1 of each layer in the optical disc 102, a predetermined curved pattern is formed by the stamper according to the present invention.

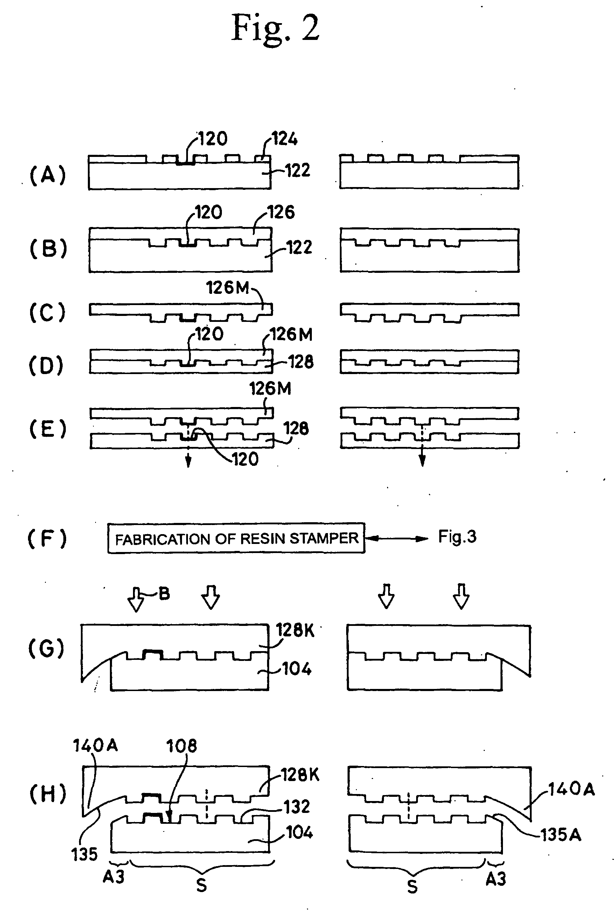

As the constituting elements of the optical disc 102, the above-described substrate 104 and information recording layer 108 have basically the same functions as those of the protective plate 50 and the information recording layer 54 in the conventional example which has already been described with reference to Fig. 12. However, a specific fabrication method thereof is different. Herein, they are formed by the procedure as shown in Fig. 2.

Fig. 2 shows an example where recording is performed only in grooves. The grooves correspond to minute concavity when a concave-convex surface is viewed from the side close to a pickup. This groove extremely slightly meanders (wobbles) and is used as an address in recording (positional information on a blank disc). In Fig. 2, the reference numeral 120 denotes a portion where a wobble signal is formed.

For convenience, in this specification, a pattern of the information recording layer 108 which is formed when viewed from the pickup in the ultimately obtained optical disc 102 is denoted as a positive pattern and a reversed pattern is denoted as a negative pattern. More specifically, the wobble signal 120 is present in a groove portion in the positive pattern while being present in a land portion in the negative pattern.

In Fig. 2, a photoresist layer (photosensitive material) 124 is first provided on a glass original disc 122 so as to be then cut with a laser, thereby forming grooves (the positive pattern) with wobbles by development or the like (Fig. 2(A)). Next, an electrically conductive film is provided so as to form a nickel-plating layer 126 by so-called electrocasting (Fig. 2(B)).

Thereafter, the nickel-plating layer 126 is removed from the glass original disc 122 so as to perform a post-treatment. As a result, a so-called master stamper 126M having a negative pattern is completed (Fig. 2(C)).

Normally, in the case of the type of optical disc in which access is made from the side of the substrate, the master stamper 126M is used or a mother stamper (positive pattern) is produced from the master stamper 126M to produce a child stamper (negative pattern) therefrom so as to be used for production of a substrate having the positive pattern.

In this embodiment, however, laser beam is irradiated not on the side of the substrate 104 but on the side of the light transmission layer 110. Therefore, a mother stamper 128 having a positive pattern is produced from the master stamper 126M. This mother stamper 128 is completed by performing a surface treatment on the master stamper 126M, performing electroplating by electrocasting, and then removing the electroplating (Figs. 2(D) and (E)).

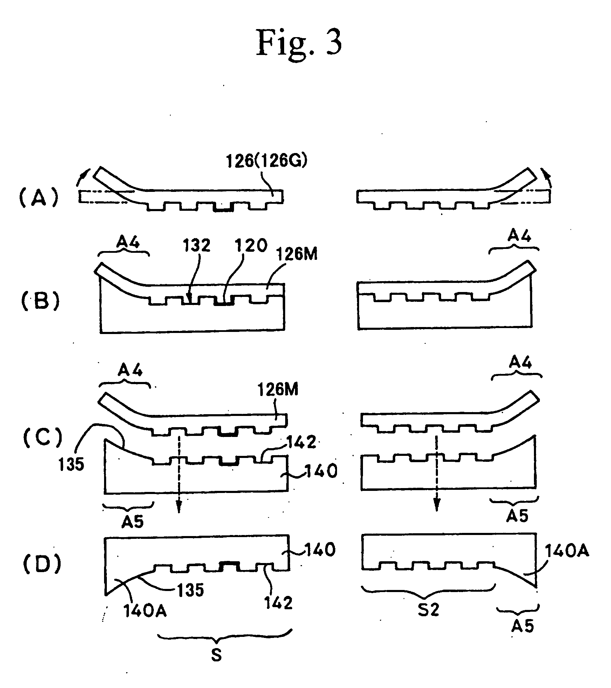

Next, as shown in Fig. 3, an light transmission stamper (that is, the stamper according to an embodiment of the present invention; since it is made of a resin in this embodiment, it is referred to as a resin stamper, for convenience) 140 for forming the information recording layer 108 on the basis of the master stamper (or the child stamper) 126M is produced.

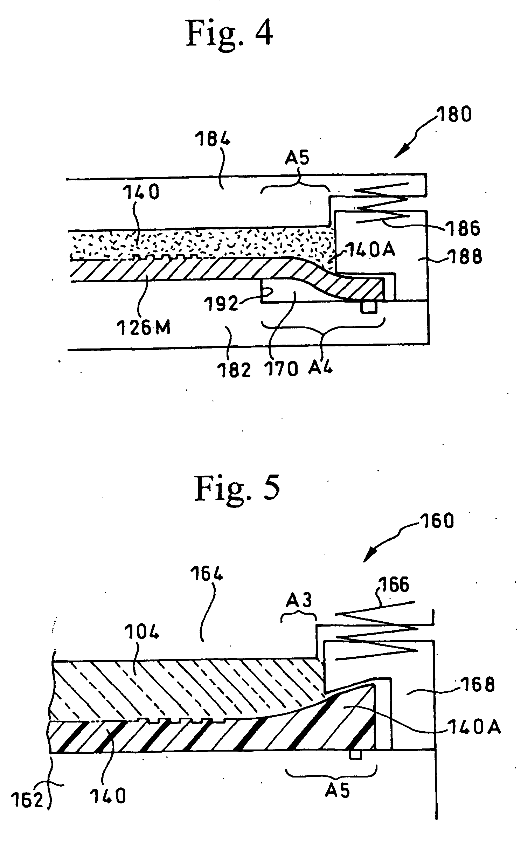

Specifically, first, as shown in Figs. 3(A) and (B), an outer peripheral portion A4 of the master stamper (or the child stamper) 126 is bent to the side opposite to the side where minute concave and convex portions 132 are present so as to produce a master stamper for resin stamper (or a child stamper) 126M. More specifically, it is fixed while being bent toward a stationary mold 182 having a step of a mold 180 as shown in Fig. 4 (Figs. 3(A) and (B)). In Fig. 4, the reference numeral 184 denotes a movable mold; 186 for a spring; 188 for an outer peripheral ring; 170 for a concave portion; and 192 for a ring-shaped concave portion. In this state, a resin for constituting the resin stamper 140 is injected and molded between the movable mold 184 of the mold 180 and the master stamper for resin stamper 126M and is then removed. As a result, the resin stamper 140 having minute concave and convex portions 142 corresponding to the positive pattern of the information recording layer 108 is completed (Figs. 3(B) and (C)).

Although the resin stamper 140 is a stamper, it is greatly characterized by having the positive pattern (that is, the wobble signal 120 is present in the groove) and a convex portion (convex bias) 140A projecting toward a transferred surface (the substrate 104) in an outer peripheral portion A5 (Fig. 3(D)). More specifically, the bias in a convex shape on the surface of the outer peripheral portion A5 is formed as an inclined plane 135 which is biased from the surface of an information recording area S by about 20 µm or more (5 µm or more) (described below).

The resin stamper 140 is fixed to the mold 160 so as to be used for molding the substrate 104, as shown in Figs. 2(G), (F) and 5. In Fig. 5, the reference numeral 162 denotes a stationary mold; 164 for a movable mold; 166 for a spring; and 168 for an outer peripheral ring. The resin constituting the substrate 104 is injected and molded in a space sandwiched between the movable mold 164 and the resin stamper 140.

Returning to Fig. 2, when the resin constituting the substrate 104 is made to fill the mold 160 by using the resin stamper 140 in this manner and is then removed, the substrate 104 having minute concave and convex portions (information recording area) 132 corresponding to the negative pattern of the information recording layer 108 is completed (Figs. 2(G) to (H)). In an outer peripheral portion A3 of the minute concave and convex portions 132 on the substrate 104, an inclined plane (concave portion) 135A corresponding to the above-described convex portion 140A of the resin stamper 140 is formed. A thickness of the outer peripheral portion A3 is gradually reduced in an outer radial direction, as compared with that of the information recording area S.

Herein, if a resin P constituting the substrate 104 is an UV curable type resin, the resin stamper 140 is made of an light transmission resin. As a result, ultraviolet ray irradiation on the resin stamper 140 can fix the substrate 104.

The object thereof is as follows.

Specifically, the substrate 104 in this embodiment does not have (is not required to have) any functions as an light transmission layer. Therefore, it is not necessarily required to be formed of an light transmission resin. On the other hand, generally, in a transfer method as is represented by a 2P method, an ultraviolet ray is generally irradiated on the side of a member on which transfer is performed, that is, on the side of the substrate 104 in this embodiment. However, if the resin constituting the substrate 104 is made of a non light transmission resin, it is extremely inefficient (it is impossible in some cases) to irradiate an ultraviolet ray on the side of the substrate 104. Moreover, as described below, in the case of a double-layered type, since the first information recording layer has already been formed, a similar problem also occurs. However, if an light transmission resin is used as a material of the resin stamper 140 whereas the resin P constituting the substrate 104 is an UV curable type resin, an ultraviolet ray B is irradiated on the side of the resin stamper 104 to allow the substrate 104 to be cured. Therefore, there is no waste in irradiation energy. Moreover, it is not necessary to particularly increase the size of an ultraviolet ray irradiation system. More specifically, the effect can be sufficiently obtained if an light transmission resin having a wavelength of 300 nm to 400 nm and a transmittance of 50% or more is used as a material for the resin stamper 140.

For a similar reason, it is also effective to allow the substrate 104, which is a member on which transfer is performed, to be heated by some sort of method and to use a thermally curable resin for the substrate 104 in view of the dispensability of ultraviolet ray irradiation on the side of the member on which transfer is performed.

As is apparent from the above, the stamper according to the present invention is not necessarily required to be a resin. It is no more necessary to be an light transmission material. In this industry (the field of optical recording media), however, equipment and know-how for curing an UV curable type resin with ultraviolet ray irradiation are well provided. In consideration of the possibility of low-cost fabrication and the reliability or the degree of freedom in formation of the minute concavity and convexity on the transfer surface of the stamper and in formation of the convex shape on the outer peripheral side, it is an optimal fabrication method that a stamper of an "light transmission resin" which is excellent in moldability is formed, and the substrate 104 made of an UV curable type resin is cured by ultraviolet ray irradiation on the side of the stamper.

By removal of the resin stamper 140, the (negative pattern of) information recording layer 108 is formed on the substrate 104. The information recording layer 108 is extremely thin and reflects the shape of the minute concave and convex portions 132 in the negative pattern. Therefore, when it is viewed from the side of a pickup, it has the minute concavity and convexity 132 of the information recording layer 108 as the positive pattern.

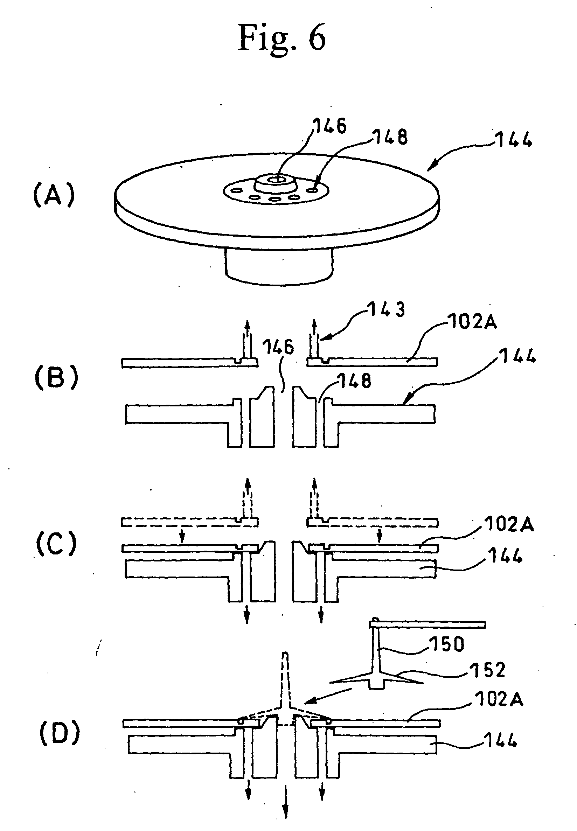

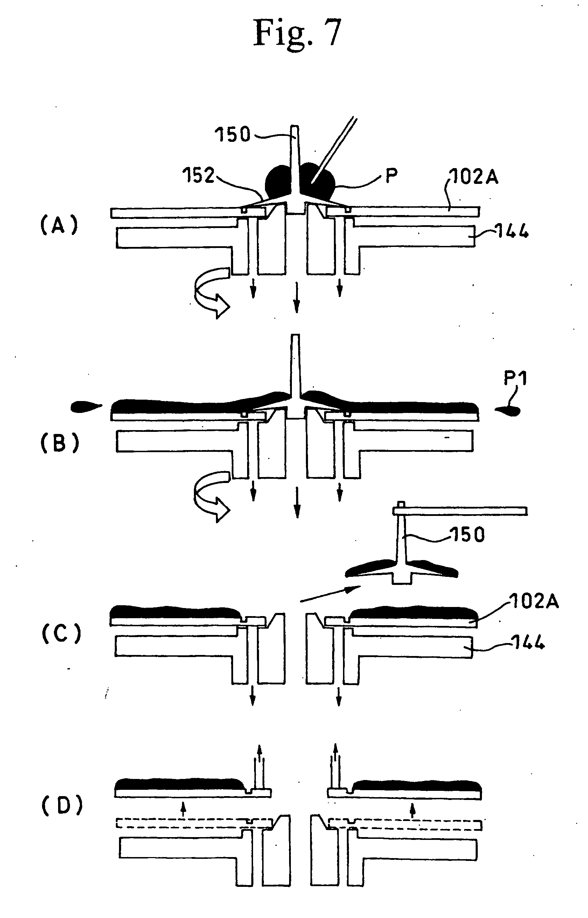

On the upper surfaces of the information recording layer 108 and the concave portion 135A, the light transmission layer 110 is formed. This light transmission layer 110 is formed by spin coating as shown in Figs. 6 and 7.

Fig. 6(A) shows a coating stage (coating table) 144. In the center of the coating stage 144, a suction port 146 for sucking a cap 150 described below is provided. A plurality of suction ports 148 for sucking an optical disc (optical disc in the state in Fig. 2(H)) 102A are provided around the cap 150.

First, the optical disc 102A, on which the information recording layer 108 is formed, is placed on the coating stage 144 while being sucked and held by suction means 143 (Figs. 6(B) and (C)). Next, the cap 150 is placed in the center of the optical disc 102A. Owing to the suction through the suction ports 146 and 148, both of them 102A and 150 are fixed onto the coating stage 144 (Fig. 6(D)).

The cap 150 is preferably made of a resin. The reason for this is as follows. In order to form an excellent light transmission layer, since it is required to prevent bubbles from entering the resin to be coated, an inclined plane 152 of the cap 150 is desirably a mirror face. Moreover, in order to prevent the optical disc 102A from being damaged, it is desired that a portion in contact with the optical disc 102A is somewhat soft.

Now referring to Fig. 7, in Fig. 7(A), the coating stage 144 is slowly rotated while the suction is being continuously performed so that the resin P is dropped onto the inclined plane 152 of the cap 150. As a result, the resin P is spread along the inclined plane 152 by centrifugal force. An excessive resin P1 is spilled from the optical disc 102A (Fig. 7(B)). Thereafter, the cap 150 in the center is removed (Fig. 7(C)), proceeding to the ultraviolet irradiation step not shown while sucking the optical disc 102A (Fig. 7(D)).

Herein, the shape of the outer peripheral portion is described.

As is already repeated, in this embodiment, the portion A3 corresponding to a radial outer peripheral portion of the information recording area S (the minute concave and convex portions 132) of the information recording layer 108 on the upper surface of the substrate 104 is biased toward inside of the substrate 104 so that a thickness of the substrate 104 is smaller than that of the information recording area S, whereby the inclined plate (concave portion) 135A is formed.

The bias (the inclined plate 135A) of the substrate 104 is formed by the inclined plate 135 of the convex portion 140A in the outer peripheral portion A5 of the resin stamper 140 according to this embodiment. The convex portion 140A is specifically formed as the inclined plane 135 which is inclined toward the member on which transfer is performed (that is, the substrate 104) so that the thickness of the resin stamper 140 gradually increases in an outer radial direction.

Therefore, as shown in Fig. 1, even if the light transmission layer 110 is formed by spin coating as described above on the substrate 104 on which the information recording layer 108 is transferred, a raise 160, which is conventionally inevitably present, is entirely absorbed by the inclined plane 135A in the outer peripheral area of the substrate 104. As a result, even if the raise 160 itself is present, it does not project beyond the light transmission layer 110.

Therefore, even without any post-treatments, the optical disc 102 without any particular inconvenience can be fabricated. The protective layer 118 is formed on the uppermost part as needed to complete the optical disc 102 fabricated by using the resin stamper 140 according to this embodiment.

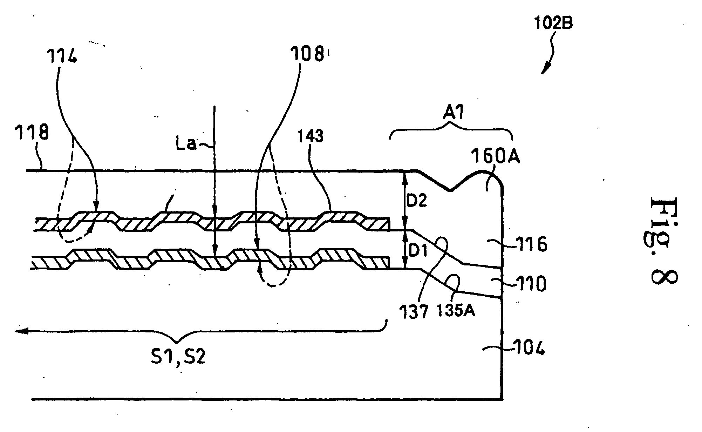

By the way, if the stamper according to the present invention is used, a double-layered optical disc 102B as shown in Fig. 8, in which light is irradiated on the side of the thin light transmission layer, can be easily fabricated. In Fig. 8, similar parts to those in the above-described embodiment are denoted by the same reference numerals.

Specifically, in order to fabricate the double-layered optical disc 102B, the above-described light transmission layer 110 is used as a first light transmission layer. A second information recording layer 114 is formed thereon by using the resin stamper 140. Further thereon, a second light transmission layer 116 may be formed thereon.

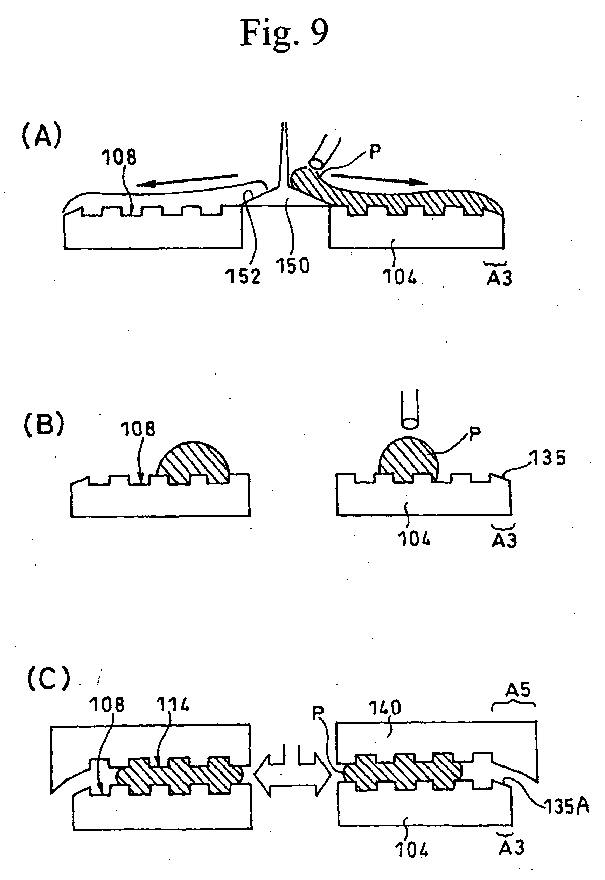

In this case, some methods are conceivable as a way of forming the second information recording layer 114. Any of the methods can simultaneously realize the "shaping" of the (first) light transmission layer 110 including the formation of the concave portion 135A and the "transfer" of the minute concave and convex portions 143 of the second information recording layer 114 by using the resin stamper 140 according to the present invention. Three representative methods thereof are shown in Fig. 9.

A method shown in Fig. 9(A) employs the above-described spin coating without any modifications. The resin P is dropped along the inclined plane 152 of the cap 150 so as to be spread over the entire surface of the information recording layer 108 while rotating the substrate 104. The resin stamper 140 described above is placed thereon. This embodiment including the following Examples 1 and 2 employs this method.

In a method shown in Fig. 9(B), in the approximate center on the information recording layer 108 (the reflective film 106), a predetermined amount of the resin P is dropped in a ring shape. The above-described stamper 140 is pressed thereon. The dropped resin P is spread over the entire surface of the information recording layer 108 by the pressing force.

A method shown in Fig. 6(C) belongs to an injection method. The resin stamper 140 is placed in advance so as to be opposed to the information recording layer 108. The resin P for the first light transmission layer is injected into a space between them 140 and 108.

In any of the methods, the functions of the resin stamper 140 can be utilized in the completely same manner without any modifications. The minute concave and convex portions 143 of the second information recording layer 114 are similar to the minute concave and convex portions 132 of the above-described first information recording layer 108 and correspond to the negative pattern thereof (when seen from the side of the pickup, it becomes the positive pattern).

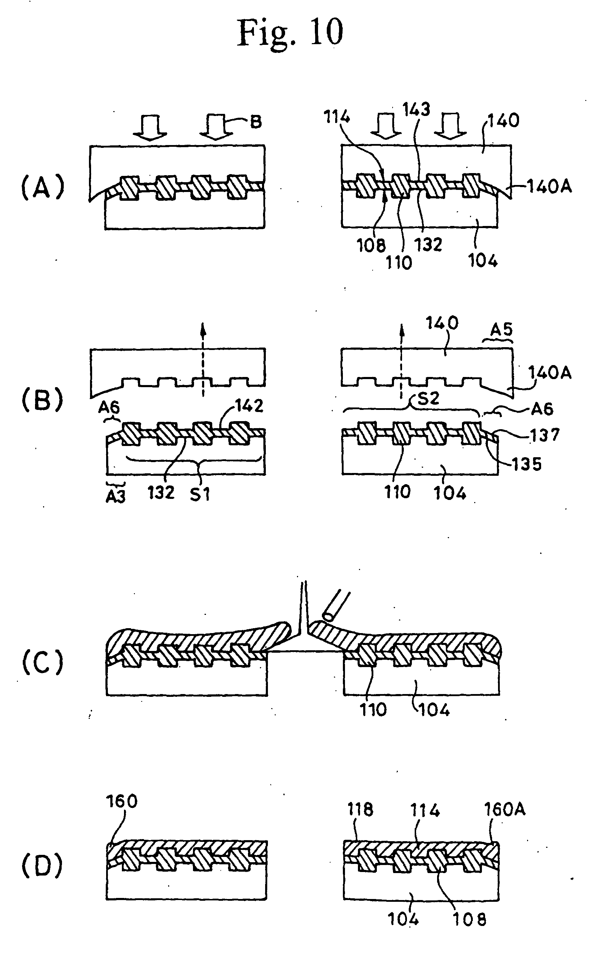

When the second light transmission layer 116 is further formed thereon by spin coating as shown in Figs. 10(C) and (D) after removal of the resin stamper 140 as shown in Figs. 10(A) and (B), the (double-layered) optical disc 102A, in which the raise 160A that is inevitably present at the formation of the second light transmission layer 116 by the spin coating is prevented from being noticeable, can be formed.

### (Example 1)

Herein, an experimental example will be described. The experimental example relates to prevention of generation of the raise 160A on the upper surface of the second light transmission layer 116 owing to a bending shape of the outer peripheral portion of each layer of the thus formed double-layered optical disc 102A.

In this experiment, (as described above), the resin stamper 140 was fabricated by injection molding. The mother stamper for resin stamper 126M, which was attached to the mold 180 for molding, had a track pitch of 0.3 µm for groove recording.

As the substrate 104, (although slightly different from the above-described fabrication method in a strict sense) using a polycarbonate resin (H4000-N282 fabricated by Mitsubishi Engineering-Plastics Corporation), the substrate 104 having an outer diameter of 12 cm and a thickness of 1.1 mm was molded at a mold temperature of 125 °C, a resin melt temperature of 360 °C and a mold clamping force of 35 tons.

On the other hand, as the resin stamper 140, using an olefin resin (ZEONEX-E28R fabricated by Zeon Corporation), the resin stamper 140 having an outer diameter of 12 cm and a thickness of 1.0 mm was molded at a mold temperature of 125 °C, a resin melt temperature of 370 °C and a mold clamping force of 35 tons. An olefin resin was used as a material of the resin stamper 140 in view of ensuring of the ease of removal after transfer of the information recording layers 108 and 114 and the characteristic that a light transmittance at the above-described wavelength from 300 nm to 400 nm is 50% or more.

The outer peripheral shape of the substrate 104 is such that a thin-walled portion (the inclined plane 135A) starts from the position 1.0 mm away from the outer peripheral edge and a thickness (the amount of inclination) of the thin-walled portion (the inclined plane 135A) at the outer edge is 1.0 mm. Moreover, the outer peripheral shape of the resin stamper 140 is such that the convex portion 140A starts at the position 1.0 mm away from the outer peripheral edge of the corresponding optical disc substrate and a thickness (the amount of projection) of the convex portion 140A at the outer edge is 1.1 mm.

When the above-described double-layered optical disc 102B was fabricated by using these substrate 104 and resin stamper 140, the raise 160A in the outer peripheral portion did not project beyond the surface of the second light transmission layer 116, corresponding to the information recording area S2, resulting in concave state of 20 µm.

### (Comparative Example)

In accordance with the experiment, which was carried out by the inventors in parallel with the experiment in the above-described Example 1 for comparison, the optical disc (102) was fabricated under the same conditions as those of the above-described Example 1 except that the combination was formed by the substrate (104) having a plane outer peripheral portion (on which the curved pattern is not formed) and the resin stamper (140). As a result, the raise (160) at the outermost periphery was in a convex state at 60 µm beyond the surface of the second light transmission layer 116 corresponding to the information recording area (S2). This state needs some sort of post-treatment because there is a possibility that this collides with a laser pickup for recording and reproduction in this state.

Even in the above-described optical disc 102 including only one layer, the same results can qualitatively be obtained regarding the prevention of the raise achieved by a change of the outer peripheral shape.

In this embodiment, even in the case of a single layer and in the case of a double layer, any of the light transmission layers, through which a laser beam passes, is formed by spin coating to have a small thickness of about 100 µm. Therefore, coma aberration can be kept small even if the numerical aperture NA is increased. Thus, a recording density for each layer can be kept high by a higher NA.

Moreover, owing to the bending shape in the outer peripheral portion, a raise on the surface of the coating can be prevented from being noticeable as a raise on the surface of the disc while forming the light transmission layer by spin coating. Therefore, no particular measure for smoothing the upper surface of the uppermost light transmission layer is needed. Therefore, larger capacity and lower cost can be simultaneously achieved in a simple manner.

In the above-described embodiment, the thickness of the light transmission layer is about 100 µm. However, the thickness of the light transmission layer to be formed in the case where the stamper according to the present invention is used is not limited thereto. However, the convex shape of the resin stamper should be changed appropriately in accordance with the thickness of the light transmission layer to be formed thereon. Qualitatively, in the case where the light transmission layer to be formed thereon is thin, the size of the convex shape may also be small; for example, about 5 µm is sufficient in some cases. However, in the case where the light transmission layer is to be formed with a thickness of, for example, about 100 µm as in the above-described example, it is preferred to form the convex portion of 30 µm or more.

Furthermore, it is apparent that the convex shape may be, for example, as flat as possible, as long as the surface of the light transmission layer does not become convex as a result of a trial and error process, instead of being a simple inclined plane. It is another great advantage of the stamper according to the present invention wherein there exists the capability of flexibly responding to such trial and error or a change in design.

In the present invention, a method for fabricating the stamper itself is not particularly limited. For example, for shaping a raise in the outer peripheral portion into a predetermined shape, it is an effective fabrication method to carry out the cutting after injection molding, or to bond two injection-molded products with each other, so as to form a single stamper according to the present invention.

On the other hand, in the case where the optical disc is mass-produced, the shape of the raise in the outer peripheral portion is approximately the same because the rotational speed of the coating stage, or a component, a viscosity or the dropped amount of a resin is the same for each optical disc. Therefore, remarkably high reproducibility can be obtained.

Thus, for example, by adjusting the shape of the convex shape through the above-described trial and error, the surface of coating can be leveled to a remarkably high level.

### INDUSTRIAL APPLICABILITY

According to the present invention, in order to form an light transmission layer thin to realize a much higher NA of laser beam without causing any problems, the excellent effect that a flattening treatment of the upper surface of the light transmission layer, which is conventionally considered as a bottleneck in fabrication, can be easily obtained at low cost by a stamper having a characteristic shape.

## Claims

1. A stamper for fabrication of an optical recording medium, comprising an information recording area having predetermined minute concavity and convexity on a transfer surface, which is used for transferring the minute concavity and convexity in the information recording area onto an information recording area on a surface of a member on which transfer is performed, the stamper not ultimately serving as a constituent element of an optical recording medium,
wherein a surface of an outer peripheral portion of the information recording area on the transfer surface is formed so as to be biased in a convex shape from the surface of the information recording area toward the member on which transfer is performed.

2. The stamper for fabrication of an optical recording medium according to claim 1, having a wobble signal in a groove of the minute concavity and convexity on the transfer surface.

3. The stamper for fabrication of an optical recording medium according to claim 1 or 2, wherein the bias in the convex shape on the surface of the outer peripheral portion of the information recording area on the transfer surface is biased from the surface of the information recording area by at least 5 µm or more.

4. The stamper for fabrication of an optical recording medium according to any one of claims 1 to 3, wherein the bias in the convex shape on the surface of the outer peripheral portion of the information recording area on the transfer surface is inclined toward the member on which transfer is performed so that a thickness of the stamper is gradually increased in an outer radial direction.

5. The stamper for fabrication of an optical recording medium according to any one of claims 1 to 4, wherein the stamper is made of an light transmission resin having a transmittance of 50% or higher at a wavelength of 300 nm to 400 nm.

6. A method of forming an information recording area and an light transmission layer, comprising the steps of:
using the stamper for fabrication of an optical recording medium as set forth in any one of claims 1 to 5 to transfer the minute concavity and convexity onto an information recording area of the member on which transfer is performed, and to form a bias in a concave shape on a surface of an outer periphery of the member, the bias in the concave shape corresponding to the convex shape;
forming a reflective film and/or a recording film at least on the minute concavity and convexity; and
forming a resin layer serving as an light transmission layer on the member, on which transfer is performed, the member including the reflective film and/or the recording film and the biased portion in the concave shape.

7. The method of forming an information recording area and an light transmission layer according to claim 6, wherein the stamper is made of an light transmission resin having a transmittance of 50% or higher at a wavelength of 300 nm to 400 nm, the member, on which transfer is performed, is made of an UV curable resin; and an ultraviolet ray is irradiated on the side of the stamper to fix the minute concavity and convexity transferred onto the member and the bias in the concave shape corresponding to the convex shape.

8. The method of forming an information recording area and an light transmission layer according to claim 6, wherein the member, on which transfer is performed, can be heated and is made of a thermally curable resin; and the member is heated to fix the minute concavity and convexity transferred onto the member and the bias in the concave shape corresponding to the convex shape.

9. An optical recording medium having at least an information recording area and an light transmission layer formed by using the method of forming the information recording area and the light transmission layer as set forth in any one of claims 6 to 8.
